# EUROPEAN PATENT APPLICATION

(11) **EP 4 456 631 A1**
(43) Date of publication of application: **30.10.2024**
(21) Application number: 21968559.1
(22) Date of filing: 22.12.2021
(51) Int. Cl.: H04W 72/04

(54) **METHOD AND APPARATUS FOR DETERMINING TIMING VALUE AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Zimmermann, Tankred Klaus
(86) International application number: PCT/CN2021/140596
(87) International publication number: WO 2023/115410

(57) **Abstract**

The present disclosure provides a method and apparatus for determining a timing value, and a readable storage medium, which are applied to the field of wireless communication. The method comprises: on the basis of a first subcarrier spacing (SCS), determining a candidate timing value for SSSG switching corresponding to the first SCS, the first SCS being greater than or equal to 240 kHz. In the present disclosure, a network device and a user device may independently determine the candidate timing value for SSSG switching corresponding to the first SCS on the basis of the first SCS, so that, while determining a timing value for monitoring a downlink channel, and after the reasonable timing value for monitoring the downlink channel is smoothly selected, energy is effectively saved.

## Description

### TECHNICAL FIELD

The present disclosure relates to the field of wireless communication technology, and in particular to a method and an apparatus for determining a timer value, and a readable storage medium.

### BACKGROUND

With a widespread application of wireless communication technology such as the fifth generation (5G) mobile communication technology, energy saving demands in wireless communication systems have become more prominent.

Before switching to a default search space set group (SSSG), a timer value for monitoring a physical downlink control channel (PDCCH) in an active downlink bandwidth part (DL BWP) is selected from candidate timer values.

How to achieve the energy saving during a discontinuous reception (DRX) active duration is a technical problem that needs to be solved.

### SUMMARY

In view of this, the present disclosure provides a method and an apparatus for determining a timer value, and a readable storage medium.

In a first aspect, a method for determining a timer candidate value is provided, performed by a user equipment (UE). The method includes: determining, based on a first subcarrier spacing (SCS), timer candidate values for search space set group (SSSG) switch corresponding to the first SCS, in which the first SCS is greater than or equal to 240KHz.

In the method, the UE may independently determine, based on the first SCS, the candidate timer values for SSSG switch corresponding to the first SCS, which thus obtains a premise for determining the timer value for monitoring the downlink channel. After successfully selecting a reasonable timer value for monitoring the downlink channel, energy can be effectively saved.

In a possible implementation, a maximum value among the timer candidate values is greater than a first value, the first value is a maximum timer duration for SSSG switch corresponding to a second SCS, and the second SCS is smaller than the first SCS.

In a possible implementation, a maximum value among the timer candidate values is N times a maximum timer candidate value corresponding to a second SCS, and the second SCS is smaller than the first SCS.

In a possible implementation, the timer candidate values include N times of all or part of timer candidate values corresponding to a second SCS, and the second SCS is smaller than the first SCS.

In a possible implementation, N is a ratio of the first SCS to the second SCS.

In a possible implementation, the second SCS is 120KHz.

In a possible implementation, when the first SCS is 480KHz or 960KHz, corresponding timer candidate values for SSSG switch are the same or different.

In a second aspect, a method for determining a timer candidate value is provided, performed by a network device. The method includes: determining, based on a first SCS, timer candidate values for SSSG switch corresponding to the first SCS, in which the first SCS is greater than or equal to 240KHz.

In the method, the network device may independently determine, based on the first SCS, the candidate timer values for SSSG switch corresponding to the first SCS, which thus obtains the premise for determining the timer value for monitoring the downlink channel. After successfully selecting a reasonable timer value for monitoring the downlink channel, energy may be effectively saved.

In a possible implementation, a maximum value among the timer candidate values is greater than a first value, the first value is a maximum timer duration for SSSG switch corresponding to a second SCS, and the second SCS is smaller than the first SCS.

In a possible implementation, a maximum value among the timer candidate values is N times a maximum timer candidate value corresponding to a second SCS, and the second SCS is smaller than the first SCS.

In a possible implementation, the timer candidate values include N times of all or part of timer candidate values corresponding to a second SCS, and the second SCS is smaller than the first SCS.

In a possible implementation, N is a ratio of the first SCS to the second SCS.

In a possible implementation, the second SCS is 120KHz.

In a possible implementation, when the first SCS is 480KHz or 960KHz, corresponding timer candidate values for SSSG switch are the same or different.

In a third aspect, a method for determining a timer value for monitoring a downlink channel is provided, performed by a UE. The method includes: receiving timer value indication information from a network device, in which the timer value indication information indicates a timer value for monitoring the downlink channel. The timer value is one of timer candidate values for SSSG switch corresponding to a first SCS, the timer candidate values are determined by the network device based on the first SCS, and the first SCS is greater than or equal to 240KHz.

In a possible implementation, a maximum value among the timer candidate values is greater than a first value, the first value is a maximum timer duration corresponding to a second SCS for SSSG switch, and the second SCS is smaller than the first SCS.

In a possible implementation, a maximum value among the timer candidate values is N times a maximum timer candidate value corresponding to the second SCS.

In a possible implementation, the timer candidate values include N times of all or part of timer candidate values corresponding to the second SCS.

In a possible implementation, N is a ratio of the first SCS to the second SCS.

In a possible implementation, the second SCS is 120KHz.

In a possible implementation, when the first SCS is 480KHz or 960KHz, corresponding timer candidate values for SSSG switch are the same or different.

In a possible implementation, the first SCS is 480KHz.

In a possible implementation, the first SCS is 960KHz.

In a possible implementation, the downlink channel is a physical downlink control channel (PDCCH).

In a fourth aspect, a method for determining a timer value for monitoring a downlink channel is provided, performed by a network device. The method includes: determining, based on a first SCS, timer candidate values for SSSG switch corresponding to the first SCS; selecting a timer candidate value from the timer candidate values; and sending timer value indication information to a UE, in which the timer value indication information indicates a timer value for monitoring the downlink channel, the timer value indication information corresponds to the timer candidate value selected., and the first SCS is greater than or equal to 240KHz.

In a possible implementation, a maximum value among the timer candidate values is greater than a first value, the first value is a maximum timer duration corresponding to a second SCS for SSSG switch, and the second SCS is smaller than the first SCS.

In a possible implementation, a maximum value among the timer candidate values is N times a maximum timer candidate value corresponding to a second SCS.

In a possible implementation, the timer candidate values include N times of all or part of timer candidate values corresponding to the second SCS.

In a possible implementation, N is a ratio of the first SCS to the second SCS.

In a possible implementation, the second SCS is 120KHz.

In a possible implementation, when the first SCS is 480KHz or 960KHz, corresponding timer candidate values for SSSG switch are the same or different.

In a possible implementation, the first SCS is 480KHz.

In a possible implementation, the first SCS is 960KHz.

In a possible implementation, the downlink channel is a PDCCH.

In a fifth aspect, a communication apparatus is provided. The communication apparatus may be used to execute the steps performed by the UE in the above-mentioned first aspect or any possible design of the first aspect. The UE may implement the functions in the above methods in the form of a hardware structure, a software module, or the hardware structure plus the software module.

When the communication apparatus described in the fifth aspect is implemented by the software module, the communication apparatus includes a processing module. The processing module is configured to determine, based on a first SCS, timer candidate values for SSSG switch corresponding to the first SCS, in which the first SCS is greater than or equal to 240KHz.

In a sixth aspect, a communication apparatus is provided. The communication apparatus may be used to execute the steps performed by the network device in the above-mentioned third aspect or any possible design of the third aspect. The network device may implement the functions in the above methods in the form of a hardware structure, a software module, or the hardware structure plus the software module.

When the communication apparatus described in the sixth aspect is implemented by the software module, the communication apparatus includes a transceiver module and a processing module. The transceiver module is configured to receive timer value indication information from a network device, in which the timer value indication information indicates a timer value for monitoring the downlink channel. The timer value is one of timer candidate values for SSSG switch corresponding to a first SCS, the timer candidate values are determined by the network device based on the first SCS, and the first SCS is greater than or equal to 240KHz.

In a seventh aspect, a communication apparatus is provided. The communication apparatus may be used to execute the steps performed by the network device in the above-mentioned second aspect or any possible design of the second aspect. The network device may implement the functions in the above methods in the form of a hardware structure, a software module, or the hardware structure plus the software module.

When the communication apparatus described in the seventh aspect is implemented by the software module, the communication apparatus includes a processing module. The processing module is configured to determine, based on a first SCS, timer candidate values for SSSG switch corresponding to the first SCS, in which the first SCS is greater than or equal to 240KHz.

In an eighth aspect, a communication apparatus is provided. The communication apparatus may be used to execute the steps performed by the network device in the above-mentioned fourth aspect or any possible design of the fourth aspect. The network device may implement the functions in the above methods in the form of a hardware structure, a software module, or the hardware structure plus the software module.

When the communication apparatus described in the eighth aspect is implemented by the software module, the communication apparatus includes a transceiver module and a processing module.

The processing module is configured to determine, based on a first SCS, timer candidate values for SSSG switch corresponding to the first SCS; and select a timer candidate value from the timer candidate values.

The transceiver module is configured to send timer value indication information to a user equipment, in which the timer value indication information indicates a timer value for monitoring the downlink channel, and the timer value indication information corresponds to the timer candidate value selected. The first SCS is greater than or equal to 240KHz.

In a ninth aspect, a communication device is provided, including: a processor, and a memory storing computer programs. When the computer programs are executed by the processor, the steps according to any possible design of the first or third aspect (which is performed by the UE) are implemented.

In a tenth aspect, a communication device is provided, including: a processor, and a memory storing computer programs. When the computer programs are executed by the processor, the steps according to any possible design of the second or fourth aspect (which is performed by the network device) are implemented.

In an eleventh aspect, a computer-readable storage medium is provided having stored instructions (or computer programs, programs) which when called and executed by a computer, enable the computer to execute the first aspect or any possible design of the first aspect, or execute the third aspect or any possible design of the third aspect.

In a twelfth aspect, a computer-readable storage medium is provided having stored instructions (or computer programs, programs) which when called and executed by a computer, enable the computer to execute the second aspect or any possible design of the second aspect, or execute the fourth aspect or any possible design of the fourth aspect.

### BRIEF DESCRIPTION OF THE DRAWINGS

The drawings described herein are used to provide further understanding of the embodiments of the present disclosure and constitute a part of present disclosure. The schematic embodiments of the embodiments of the present disclosure and their descriptions are used to explain the embodiments of the present disclosure and do not constitute improper limitations on the embodiments of the present disclosure.

The accompanying drawings herein are incorporated in and constitute a part of the specification, illustrate embodiments consistent with the embodiments of the present disclosure, and together with the description, serve to explain the principles of the embodiments of the present disclosure.
FIG. 1 is a schematic diagram of a wireless communication system architecture according to an embodiment of the present disclosure.
FIG. 2 is a flowchart illustrating a method for determining a timer value according to an exemplary embodiment.
FIG. 3 is a flowchart illustrating a method for determining a timer value according to an exemplary embodiment.
FIG. 4 is a flowchart illustrating a method for determining a timer value according to an exemplary embodiment.
FIG. 5 is a flowchart illustrating a method for determining a timer value according to an exemplary embodiment.
FIG. 6 is a flowchart illustrating a method for determining a timer value according to an exemplary embodiment.
FIG. 7 is a flowchart illustrating a method for determining a timer value according to an exemplary embodiment.
FIG. 8 is a flowchart illustrating a method for determining a timer value according to an exemplary embodiment.
FIG. 9 is a flowchart illustrating a method for determining a timer value according to an exemplary embodiment.
FIG. 10 is a flowchart illustrating a method for determining a timer value according to an exemplary embodiment.
FIG. 11 is a structure diagram illustrating an apparatus for determining a timer value according to an exemplary embodiment.
FIG. 12 is a structure diagram illustrating an apparatus for determining a timer value according to an exemplary embodiment.
FIG. 13 is a structure diagram illustrating a device for determining a timer value according to an exemplary embodiment.
FIG. 14 is a structure diagram illustrating an apparatus for determining a timer value according to an exemplary embodiment.
FIG. 15 is a structure diagram illustrating an apparatus for determining a timer value according to an exemplary embodiment.
FIG. 16 is a structure diagram illustrating a device for determining a timer value according to an exemplary embodiment.

### DETAILED DESCRIPTION

The embodiments of the present disclosure are now further described in conjunction with the accompanying drawings and specific implementations.

Reference will now be made in detail to exemplary embodiments, examples of which are illustrated in the accompanying drawings. When the following description refers to the drawings, unless otherwise indicated, the same numbers in different drawings represent the same or similar elements. The implementations described in the following exemplary embodiments do not represent all possible implementations consistent with the embodiments of the present disclosure. Rather, they are merely examples of apparatuses and methods consistent with some aspects of the disclosure as recited in the accompanying claims.

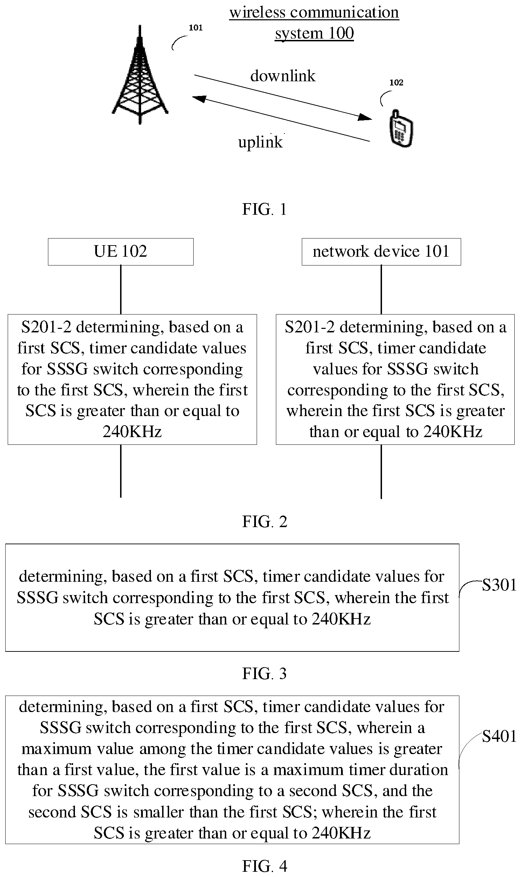

As shown in FIG. 1, a method for determining a timer value according to an embodiment of the present disclosure may be applied to a wireless communication system 100, which may include but is not limited to a network device 101 and a UE 102. The UE 102 is configured to support carrier aggregation. The UE 102 may be connected to multiple carrier components of the network device 101, including a primary carrier component and one or more secondary carrier components.

It should be understood that the above wireless communication system 100 may be applied to both low-frequency scenarios and high-frequency scenarios. The application scenarios of the wireless communication system 100 include but are not limited to a long term evolution (LTE) system, a LTE frequency division duplex (FDD) system, a LTE time division duplex (TDD) system, a worldwide interoperability for micro wave access (WiMAX) communication system, a cloud radio access network (CRAN) system, a future fifth-generation (5G) system, a new radio (NR) communication system or a future evolved public land mobile network (PLMN) system, etc.

The UE 102 shown above may be a user device, a terminal, an access terminal, a terminal unit, a terminal station, a mobile station (MS), a remote station, a remote terminal, a mobile terminal, a wireless communication device, a terminal agent or a customer equipment, etc. The UE 102 may have a wireless transceiver function, and may communicate (such as wireless communication) with one or more network devices 101 of one or more communication systems, and receive network services provided by the network device 101. The network device 101 here includes but is not limited to the base station shown in the figure.

The UE 102 may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, a vehicle-mounted device, a wearable device, a user device in a future 5G network, or a user device in a future evolved PLMN network, etc.

The network device 101 may be an access network device (or an access network node). The access network device refers to a device that provides network access functions, such as a radio access network (RAN) base station and the like. The network device may specifically include a base station (BS) device, or include a BS device and a radio resource management device for controlling the BS device, etc. The network device may also include a relay station (relay device), an access point, a base station in a future 5G network, a base station in a future evolved PLMN network, or an NR base station, etc. The network device may be a wearable device or a vehicle-mounted device. The network device may also be a communication chip having a communication module.

For example, the network device 101 includes but is not limited to: a next-generation base station (gnodeB, gNB) in 5G, an evolved node B (eNB) in an LTE system, a radio network controller (RNC), a node B (NB) in a WCDMA system, a wireless controller under a CRAN system, a base station controller (BSC), a base transceiver station (BTS) in a GSM system or a CDMA system, a home base station (for example, home evolved nodeB, or home node B, HNB), a baseband unit (BBU), a transmitting and receiving point (TRP), a transmitting point (TP) or a mobile switching center, etc.

In some possible implementations, when the SCS is 15 KHz, the corresponding candidate timer values for SSSG switch include: {1, 2, 3, ... , 20, 30, 40, 50, 60, 80, 100}, where the `...' represents all integer values between 4 and 19.

In some possible implementations, when the SCS is 30 KHz, the corresponding candidate timer values for SSSG switch include: {1, 2, 3, ... , 40, 60, 80, 100, 100, 160, 200}, where the `...' represents all values between 4 and 39.

In some possible implementations, when the SCS is 60 KHz, the corresponding candidate timer values for SSSG switch include: {1, 2, 3, ..., 80, 120, 160, 200, 240, 320, 400}, where the `...' represents all values between 4 and 79.

In some possible implementations, when the SCS is 120 KHz, the corresponding candidate timer values for SSSG switch include: {1, 2, 3, ..., 160, 240, 320, 400, 480, 640, 800}, where the `...' represents all values between 4 and 159.

As the SCS gradually increases, if the timer candidate values for SSSG switch corresponding to the high SCS cannot be known, energy saving will not be possible in the active phase.

The embodiments of the present disclosure provides a method for determining a timer candidate value. FIG. 2 is a flowchart illustrating a method for determining a timer candidate value according to an exemplary embodiment. As shown in FIG. 2, the method includes the following steps 201-202.

At S201, the network device 101 determines, based on a first SCS, timer candidate values for SSSG switch corresponding to the first SCS. The first SCS is greater than or equal to 240KHz.

At S202, the UE101 determines, based on a first SCS, timer candidate values for SSSG switch corresponding to the first SCS. The first SCS is greater than or equal to 240KHz.

In some possible implementations, the downlink channel is a PDCCH.

In some possible implementations, the first SCS is 240KHz.

In some possible implementations, the first SCS is 480KHz.

In some possible implementations, the first SCS is 960KHz.

In some possible implementations, the first SCS is greater than 960 KHz.

In some possible implementations, a maximum value among the timer candidate values is greater than a first value, the first value is a maximum timer duration corresponding to a second SCS for SSSG switch.

For example, in a possible example, the second SCS is 120KHz, and a maximum timer duration for SSSG switch corresponding to 120KHz is 800 slots, then the first value is 800 slots. When the first SCS is 480KHz, the maximum value among the timer candidate values corresponding to the first SCS is greater than 800 slots. When the first SCS is 960KHz, the maximum value among the timer candidate values corresponding to the first SCS is greater than 800 slots.

In some possible implementations, the maximum value among the timer candidate values is N times the maximum timer candidate value corresponding to the second SCS.

In one example, N is 2. In another example, N is four. In yet another example, N is 8. In yet another example, N is 16.

For example, in a possible example, the second SCS is 120KHz, and the maximum timer duration for SSSG switch corresponding to 120KHz is 800 slots. When the first SCS is 480KHz, the maximum value among the timer candidate values corresponding to the first SCS may be 1600 slots, 3200 slots, 6400 slots, etc. When the first SCS is 960KHz, the maximum value among the timer candidate values corresponding to the first SCS may be 1600 slots, 3200 slots, 6400 slots, etc.

In some possible implementations, the timer candidate values include N times of all timer candidate values corresponding to the second SCS, and the second SCS is smaller than the first SCS.

In a possible example, a number of timer candidate values for SSSG switch corresponding to the first SCS is the same as a number of timer candidate values for SSSG switch corresponding to the second SCS, and the timer candidate values for SSSG switch corresponding to the first SCS include N times of each timer candidate value for SSSG switch corresponding to the second SCS.

In some possible implementations, the timer candidate values include N times of a part of timer candidate values corresponding to a second SCS, and the second SCS is smaller than the first SCS.

In a possible example, a number of timer candidate values for SSSG switch corresponding to the first SCS is smaller than a number of timer candidate values for SSSG switch corresponding to the second SCS, and the timer candidate values for SSSG switch corresponding to the first SCS are a part of the timer candidate values for SSSG switch corresponding to the second SCS. The timer candidate values for SSSG switch corresponding to the first SCS include N times of a part of the timer candidate values for SSSG switch corresponding to the second SCS.

In a possible example, the timer candidate values for SSSG switch corresponding to the first SCS includes 4 times of the timer candidate values for SSSG switch corresponding to the second SCS. The second SCS is 120KHz and the first SCS is 480KHz. The timer candidate values for SSSG switch corresponding to the second SCS include: {1, 2, 3, ..., 160, 240, 320, 400, 480, 640, 800}, where the `...' represents all values between 4 and 159. The timer candidate values for SSSG switch corresponding to the first SCS may be selected from {4, 8, 12, ..., 640, 960, 1280, 1600, 1920, 2560, 3200}. For example, the timer candidate values for SSSG switch corresponding to the first SCS may include {4, 160, 640, 960, 1280, 1600, 2560, 3200}.

In a possible example, the timer candidate values for SSSG switch corresponding to the first SCS include 8 times of the timer candidate values for SSSG switch corresponding to the second SCS. The second SCS is 120KHz and the first SCS is 960KHz. The timer candidate values for SSSG switch corresponding to the second SCS include: {1, 2, 3, ..., 160, 240, 320, 400, 480, 640, 800}, where the `...' represents all values between 4 and 159. The timer candidate values for SSSG switch corresponding to the first SCS may be selected from {8, 16, 24, ... , 1280, 1920, 2560, 3200, 5120, 6400}. For example, the timer candidate values for SSSG switch corresponding to the first SCS may include {8, 320, 1280, 1920, 2560, 3200, 5120, 6400}.

In a possible example, N is a ratio of the first SCS to the second SCS.

For example, in a possible example, the second SCS is 120KHz, and N is 4 when the first SCS is 480KHz; N is 8 when the first SCS is 960KHz.

In a possible implementation, when the first SCS is 480 KHz or 960 KHz, the corresponding timer candidate values for SSSG switch are the same or different.

In a possible implementation, both the network device and the UE determine, based on the first SCS, the timer candidate values for SSSG switch corresponding to the first SCS, according to the same agreement in a protocol, so that the timer candidate values determined by the network device and the UE are the same.

In the embodiments of the disclosure, the network device and the UE may independently determine, based on the first SCS, the timer candidate values for SSSG switch corresponding to the first SCS, which thus obtains the premise for determining the timer value for monitoring the downlink channel. After successfully selecting a reasonable timer value for monitoring the downlink channel, energy saving may be effectively achieved.

An embodiment of the present disclosure provides a method for determining a timer candidate value, which is performed by a UE or a network device. FIG. 3 is a flowchart illustrating a method for determining a timer value according to an exemplary embodiment. As shown in FIG. 3, the method includes the following step S301.

At S301, timer candidate values for SSSG switch corresponding to a first SCS are determined based on the first SCS, in which he first SCS is greater than or equal to 240KHz.

In some possible implementations, the downlink channel is a PDCCH.

In some possible implementations, the first SCS is 240KHz.

In some possible implementations, the first SCS is 480KHz.

In some possible implementations, the first SCS is 960KHz.

In some possible implementations, the first SCS is greater than 960 KHz.

In some possible implementations, a maximum value among the timer candidate values is greater than a first value. The first value is a maximum timer duration for SSSG switch corresponding to a second SCS, and the second SCS is smaller than the first SCS.

For example, in a possible example, the second SCS is 120KHz, and the maximum timer duration for SSSG switch corresponding to 120KHz is 800 slots, then the first value is 800 slots. When the first SCS is 480KHz, the maximum value among the timer candidate values corresponding to the first SCS is greater than 800 slots. When the first SCS is 960KHz, the maximum value among the timer candidate values corresponding to the first SCS is greater than 800 slots.

In a possible example, the second SCS is 120 KHz, and the corresponding timer candidate values for SSSG switch include: {1, 2, 3, ..., 160, 240, 320, 400, 480, 640, 800}, where the `...' represents all values between 4 and 159. The maximum timer duration corresponding to 120KHz for SSSG switch is 800 slots, and the first value is 800. The maximum value among the timer candidate values for SSSG switch corresponding to the first SCS is greater than said first value. For example, in an example, the first SCS is 480KHz, and the corresponding timer candidate values for SSSG switch include {4,160,640,960,1280,1600,2560,3200}, where the maximum value 3200 among the timer candidate values for SSSG switch corresponding to the first SCS is greater than the first value 800, which complies with the limitation that "the maximum value among the timer candidate values for SSSG switch corresponding to the first SCS is greater than said first value".

In a possible example, the second SCS is 120 KHz, and the corresponding timer candidate values for SSSG switch include: {1, 2, 3, ..., 160, 240, 320, 400, 480, 640, 800}, where the `...' represents all values between 4 and 159. The maximum timer duration for SSSG switch corresponding to 120KHz is 800 slots, and the first value is 800. The maximum value among the timer candidate values for SSSG switch corresponding to the first SCS is greater than said first value. For example, in an example, the first SCS is 960KHz, and the corresponding timer candidate values for SSSG switch include {8, 320, 1280, 1920, 2560, 3200, 5120, 6400}, where the maximum value 6400 among the timer candidate values for SSSG switch corresponding to the first SCS is greater than the first value 800, which complies with the limitation that "the maximum value among the timer candidate values for SSSG switch corresponding to the first SCS is greater than said first value".

In some possible implementations, a maximum value among the timer candidate values is N times a maximum timer candidate value corresponding to a second SCS, and the second SCS is smaller than the first SCS.

In an example, N is 2. In another example, N is four. In yet another example, N is 8. In yet another example, N is 16.

For example, in a possible example, the second SCS is 120KHz, and the maximum timer duration for SSSG switch corresponding to 120KHz is 800 slots. When the first SCS is 480KHz, the maximum value among the timer candidate values corresponding to the first SCS may be 1600 slots, 3200 slots, 6400 slots, etc. When the first SCS is 960KHz, the maximum value among the timer candidate values corresponding to the first SCS may be 1600 slots, 3200 slots, 6400 slots, etc.

In some possible implementations, the timer candidate values include N times of all or part of timer candidate values corresponding to a second SCS, and the second SCS is smaller than the first SCS.

In a possible example, a number of timer candidate values for SSSG switch corresponding to the first SCS is the same as a number of timer candidate values for SSSG switch corresponding to the second SCS, and the timer candidate values for SSSG switch corresponding to the first SCS include N times of each timer candidate value for SSSG switch corresponding to the second SCS.

In some possible implementations, the timer candidate values include N times of a part of timer candidate values corresponding to a second SCS, and the second SCS is smaller than the first SCS.

In a possible example, a number of timer candidate values for SSSG switch corresponding to the first SCS is smaller than a number of timer candidate values for SSSG switch corresponding to the second SCS, and the timer candidate values for SSSG switch corresponding to the first SCS are part of the timer candidate values for SSSG switch corresponding to the second SCS. The timer candidate values for SSSG switch corresponding to the first SCS include N times of a part of the timer candidate values for SSSG switch corresponding to the second SCS.

In a possible example, the timer candidate values for SSSG switch corresponding to the first SCS include 4 times of the timer candidate values for SSSG switch corresponding to the second SCS. The second SCS is 120KHz and the first SCS is 480KHz. The timer candidate values for SSSG switch corresponding to the second SCS include: {1, 2, 3, ..., 160, 240, 320, 400, 480, 640, 800}, where the `...' represents all values between 4 and 159. The timer candidate values for SSSG switch corresponding to the first SCS may be selected from {4, 8, 12,..., 640, 960, 1280, 1600, 1920, 2560, 3200}. For example, the timer candidate values for SSSG switch corresponding to the first SCS may include {4, 160, 640, 960, 1280, 1600, 2560, 3200}.

In a possible example, the timer candidate values for SSSG switch corresponding to the first SCS include 8 times of the timer candidate values for SSSG switch corresponding to the second SCS. The second SCS is 120KHz and the first SCS is 960KHz. The timer candidate values for SSSG switch corresponding to the second SCS include: {1, 2, 3, ..., 160, 240, 320, 400, 480, 640, 800}, where the `...' represents all values between 4 and 159. The timer candidate values for SSSG switch corresponding to the first SCS may be selected from {8, 16, 24,..., 1280, 1920, 2560, 3200, 5120, 6400}. For example, the timer candidate values for SSSG switch corresponding to the first SCS may include {8, 320, 1280, 1920, 2560, 3200, 5120, 6400}.

In a possible example, N is the ratio of the first SCS to the second SCS.

For example, in a possible example, the second SCS is 120KHz, and N is 4 when the first SCS is 480KHz; N is 8 when the first SCS is 960KHz.

In a possible implementation, when the first SCS is 480 KHz or 960 KHz, the corresponding timer candidate values for SSSG switch are the same or different.

In the embodiments of the disclosure, the network device and the UE may independently determine, based on the first SCS, the timer candidate values for SSSG switch corresponding to the first SCS, which thus obtains the premise for determining the timer value for monitoring the downlink channel. After successfully selecting a reasonable timer value for monitoring the downlink channel, energy saving may be effectively achieved.

An embodiment of the present disclosure provides a method for determining a timer candidate value, which is performed by a UE or a network device. FIG. 4 is a flowchart illustrating a method for determining a timer candidate value according to an exemplary embodiment. As shown in FIG. 4, the method includes the following step S401.

At S401, timer candidate values for SSSG switch corresponding to a first SCS are determined based on the first SCS, in which a maximum value among the timer candidate values is greater than a first value, the first value is a maximum timer duration for SSSG switch corresponding to a second SCS, and the second SCS is smaller than the first SCS; the first SCS is greater than or equal to 240KHz

In a possible example, the second SCS is 120 KHz, and the maximum timer duration for SSSG switch corresponding to 120 KHz is 800 slots, so the first value is 800. When the first SCS is 480KHz, the maximum value among the timer candidate values corresponding to the first SCS is greater than 800 slots. When the first SCS is 960KHz, the maximum value among the timer candidate values corresponding to the first SCS is greater than 800 slots.

In a possible example, the second SCS is 60 KHz, and the maximum timer duration for SSSG switch corresponding to 60 KHz is 400 slots, so the first value is 400. When the first SCS is 480KHz, the maximum value among the timer candidate values corresponding to the first SCS is greater than 400 slots. When the first SCS is 960KHz, the maximum value among the timer candidate values corresponding to the first SCS is greater than 400 slots.

In a possible example, the second SCS is 120 KHz, and the corresponding timer candidate values for SSSG switch include: {1, 2, 3, ..., 160, 240, 320, 400, 480, 640, 800}, where the `...' represents all values between 4 and 159. The maximum timer duration for SSSG switch corresponding to 120KHz is 800 slots, and the first value is 800. The maximum value among the timer candidate values for SSSG switch corresponding to the first SCS is greater than said first value. For example, in an example, the first SCS is 480KHz, and the corresponding timer candidate values for SSSG switch include {4,160,640,960,1280,1600,2560,3200}, where the maximum value 3200 among the timer candidate values for SSSG switch corresponding to the first SCS is greater than the first value 800, which complies with the limitation that "the maximum value among the timer candidate values for SSSG switch corresponding to the first SCS is greater than said first value".

In a possible example, the second SCS is 120 KHz, and the corresponding timer candidate values for SSSG switch include: {1, 2, 3, ..., 160, 240, 320, 400, 480, 640, 800}, where the `...' represents all values between 4 and 159. The maximum timer duration corresponding to 120KHz for SSSG switch is 800 slots, and the first value is 800. The maximum value among the timer candidate values for SSSG switch corresponding to the first SCS is greater than said first value. For example, in an example, the first SCS is 960KHz, and the corresponding timer candidate values for SSSG switch include {8, 320, 1280, 1920, 2560, 3200, 5120, 6400}, where the maximum value 6400 among the timer candidate values for SSSG switch corresponding to the first SCS is greater than the first value 800, which complies with the limitation that "the maximum value among the timer candidate values for SSSG switch corresponding to the first SCS is greater than said first value".

In some possible implementations, the downlink channel is a PDCCH.

In some possible implementations, the first SCS is 240KHz.

In some possible implementations, the first SCS is 480KHz.

In some possible implementations, the first SCS is 960KHz.

In some possible implementations, the first SCS is greater than 960 KHz.

Optionally, in some possible implementations, a maximum value among the timer candidate values is N times a maximum timer candidate value corresponding to a second SCS, and the second SCS is smaller than the first SCS.

In an example, N is 2. In another example, N is four. In yet another example, N is 8. In yet another example, N is 16.

For example, in a possible example, the second SCS is 120KHz, and the maximum timer duration for SSSG switch corresponding to 120KHz is 800 slots. When the first SCS is 480KHz, the maximum value among the timer candidate values corresponding to the first SCS may be 1600 slots, 3200 slots, 6400 slots, etc. When the first SCS is 960KHz, the maximum value among the timer candidate values corresponding to the first SCS may be 1600 slots, 3200 slots, 6400 slots, etc.

In some possible implementations, the timer candidate values include N times of all timer candidate values corresponding to a second SCS, and the second SCS is smaller than the first SCS.

In a possible example, a number of timer candidate values for SSSG switch corresponding to the first SCS is the same as a number of timer candidate values for SSSG switch corresponding to the second SCS, and the timer candidate values for SSSG switch corresponding to the first SCS include N times of each timer candidate value for SSSG switch corresponding to the second SCS.

In some possible implementations, the timer candidate values include N times of a part of timer candidate values corresponding to a second SCS, and the second SCS is smaller than the first SCS.

In a possible example, a number of timer candidate values for SSSG switch corresponding to the first SCS is smaller than a number of timer candidate values for SSSG switch corresponding to the second SCS, and the timer candidate values for SSSG switch corresponding to the first SCS are part of the timer candidate values for SSSG switch corresponding to the second SCS. The timer candidate values for SSSG switch corresponding to the first SCS include N times of a part of the timer candidate values for SSSG switch corresponding to the second SCS.

In a possible example, the timer candidate value for SSSG switch corresponding to the first SCS includes 4 times the timer candidate values for SSSG switch corresponding to the second SCS. The second SCS is 120KHz and the first SCS is 480KHz. The timer candidate values for SSSG switch corresponding to the second SCS include: {1, 2, 3, ..., 160, 240, 320, 400, 480, 640, 800}, where the `...' represents all values between 4 and 159. The timer candidate values for SSSG switch corresponding to the first SCS may be selected from {4, 8, 12,..., 640, 960, 1280, 1600, 1920, 2560, 3200}. For example, the timer candidate values for SSSG switch corresponding to the first SCS may include {4, 160, 640, 960, 1280, 1600, 2560, 3200}.

In a possible example, the timer candidate values for SSSG switch corresponding to the first SCS include 8 times of the timer candidate values for SSSG switch corresponding to the second SCS. The second SCS is 120KHz and the first SCS is 960KHz. The timer candidate values for SSSG switch corresponding to the second SCS include: {1, 2, 3, ..., 160, 240, 320, 400, 480, 640, 800}, where the `...' represents all values between 4 and 159. The timer candidate values for SSSG switch corresponding to the first SCS may be selected from {8, 16, 24,..., 1280, 1920, 2560, 3200, 5120, 6400}. For example, the timer candidate values for SSSG switch corresponding to the first SCS may include {8, 320, 1280, 1920, 2560, 3200, 5120, 6400}.

In a possible example, N is a ratio of the first SCS to the second SCS.

In an example, N is 2. In another example, N is four. In yet another example, N is 8. In yet another example, N is 16.

For example, in a possible example, the second SCS is 120KHz, and N is 4 when the first SCS is 480KHz; N is 8 when the first SCS is 960KHz.

Optionally, in a possible implementation, when the first SCS is 480KHz or 960KHz, the corresponding timer candidate values for SSSG switch are the same or different.

In the embodiments of the disclosure, the network device and the user device can independently determine, based on the first SCS, the timer candidate values for SSSG switch corresponding to the first SCS, and the maximum value among the timer candidate values is greater than the maximum timer duration for SSSG switch corresponding to the second SCS, thus maintaining a reasonable rule that the larger the SCS, the larger the maximum value among the timer candidate values, obtaining the premise for determining the timer value for monitoring the downlink channel. After successfully selecting a reasonable timer value for monitoring the downlink channel, effective energy saving may be achieved.

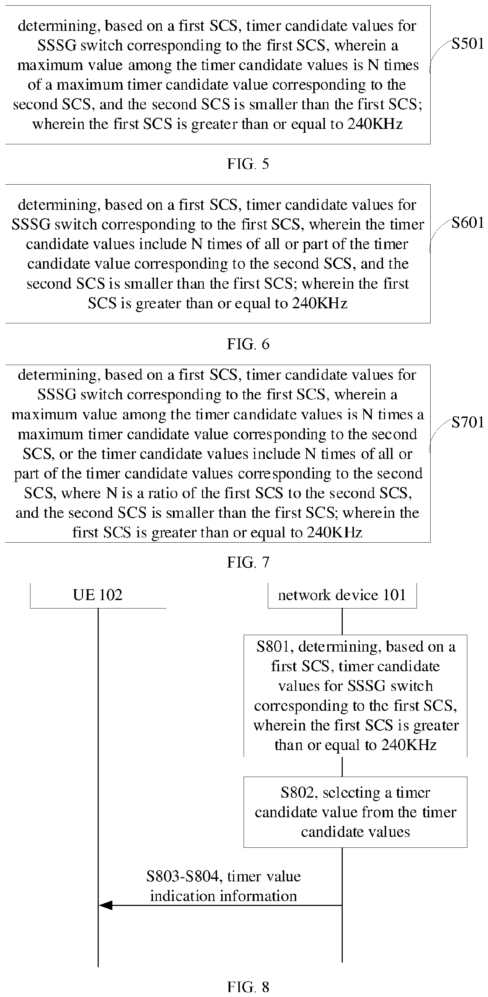

An embodiment of the present disclosure provides a method for determining a timer candidate value, which is performed by a UE or a network device. FIG. 5 is a flowchart illustrating a method for determining a timer candidate value according to an exemplary embodiment. As shown in FIG. 5, the method includes the following step S501.

At S501, timer candidate values for SSSG switch corresponding to a first SCS are determined based on the first SCS, in which a maximum value among the timer candidate values is N times of a maximum timer candidate value corresponding to the second SCS, and the second SCS is smaller than the first SCS; the first SCS is greater than or equal to 240KHz.

In some possible implementations, the second SCS is 120KHz.

In some possible implementations, the second SCS is 60KHz.

In some possible implementations, the downlink channel is a PDCCH.

In some possible implementations, the first SCS is 240KHz.

In some possible implementations, the first SCS is 480KHz.

In some possible implementations, the first SCS is 960KHz.

In some possible implementations, the first SCS is greater than 960 KHz.

In a possible example, the second SCS is 120 KHz, the maximum timer duration for SSSG switch corresponding to 120 KHz is 800 slots, and the timer candidate value for SSSG switch corresponding to the first SCS is N times of 800 slots.

In a possible example, the second SCS is 60KHz, the maximum timer duration for SSSG switch corresponding to 120KHz is 400 slots, and the timer candidate value for SSSG switch corresponding to the first SCS is N times of 400 slots.

In a example, N is 2. In another example, N is 4. In yet another example, N is 8. In yet another example, N is 16.

For example, in a possible example, the second SCS is 120KHz, and the maximum timer duration for SSSG switch corresponding to 120KHz is 800 slots. When the first SCS is 480KHz, the maximum value among the timer candidate values corresponding to the first SCS may be 1600 slots, 3200 slots, 6400 slots, etc. When the first SCS is 960KHz, the maximum value among the timer candidate values corresponding to the first SCS may be 1600 slots, 3200 slots, 6400 slots, etc.

For example, in a possible example, the second SCS is 120KHz, and the timer candidate values corresponding to the second SCS for SSSG switch include: {1, 2, 3, ... ,160, 240, 320, 400, 480, 640, 800}, where the `...' represents all values between 4 and 159. In this case, for example, the first SCS is 480KHz, when N is 4, the maximum value among the timer candidate values for SSSG switch corresponding to the first SCS may be 3200 slots, for example, the timer candidate value for SSSG switch corresponding to the first SCS may include {4, 160, 640, 960, 1280, 1600, 2560, 3200}. In some possible implementations, the maximum value among the timer candidate values is greater than a first value, and the first value is a maximum timer duration corresponding to the second SCS for SSSG switch.

For example, in a possible example, the second SCS is 120KHz, and the maximum timer duration for SSSG switch corresponding to 120KHz is 800 slots, so the first value is 800 slots. When the first SCS is 480KHz, the maximum value among the timer candidate values corresponding to the first SCS is greater than 800 slots. When the first SCS is 960KHz, the maximum value among the timer candidate values corresponding to the first SCS is greater than 800 slots.

In some possible implementations, the timer candidate values include N times of all timer candidate values corresponding to the second SCS, and the second SCS is smaller than the first SCS.

In a possible example, a number of timer candidate values for SSSG switch corresponding to the first SCS is the same as a number of timer candidate values for SSSG switch corresponding to the second SCS, and the timer candidate values for SSSG switch corresponding to the first SCS include N times of each timer candidate value for SSSG switch corresponding to the second SCS.

In some possible implementations, the timer candidate value includes N times of a part of timer candidate values corresponding to a second SCS, and the second SCS is smaller than the first SCS.

In a possible example, a number of timer candidate values for SSSG switch corresponding to the first SCS is smaller than a number of timer candidate values for SSSG switch corresponding to the second SCS, and the timer candidate values for SSSG switch corresponding to the first SCS are part of the timer candidate values for SSSG switch corresponding to the second SCS. The timer candidate values for SSSG switch corresponding to the first SCS include N times of a part of the timer candidate values for SSSG switch corresponding to the second SCS.

In a possible example, the timer candidate values for SSSG switch corresponding to the first SCS include 4 times of the timer candidate values for SSSG switch corresponding to the second SCS. The second SCS is 120KHz and the first SCS is 480KHz. The timer candidate values for SSSG switch corresponding to the second SCS include: {1, 2, 3, ..., 160, 240, 320, 400, 480, 640, 800}, where the `...' represents all values between 4 and 159. The timer candidate values for SSSG switch corresponding to the first SCS may be selected from {4, 8, 12,..., 640, 960, 1280, 1600, 1920, 2560, 3200}. For example, the timer candidate values for SSSG switch corresponding to the first SCS may include {4, 160, 640, 960, 1280, 1600, 2560, 3200}.

In a possible example, the timer candidate values for SSSG switch corresponding to the first SCS include 8 times of the timer candidate values for SSSG switch corresponding to the second SCS. The second SCS is 120KHz and the first SCS is 960KHz. The timer candidate values for SSSG switch corresponding to the second SCS include: {1, 2, 3, ..., 160, 240, 320, 400, 480, 640, 800}, where the '...' represents all values between 4 and 159. The timer candidate values for SSSG switch corresponding to the first SCS may be selected from {8, 16, 24,..., 1280, 1920, 2560, 3200, 5120, 6400}. For example, the timer candidate values for SSSG switch corresponding to the first SCS may include {8, 320, 1280, 1920, 2560, 3200, 5120, 6400}.

Optionally, in a possible example, N is a ratio of the first SCS to the second SCS.

For example, in a possible example, the second SCS is 120KHz, and N is 4 when the first SCS is 480KHz; N is 8 when the first SCS is 960KHz.

Optionally, in a possible implementation, when the first SCS is 480KHz or 960KHz, the corresponding timer candidate values for SSSG switch are the same or different.

In the embodiments of the disclosure, the network device and the UE may independently determine, based on the first SCS, the timer candidate values for SSSG switch corresponding to the first SCS, and the maximum value among the timer candidate values is N times the maximum timer candidate value corresponding to the second SCS, so that the maximum value among the timer candidate values of the higher SCS and the maximum value among the timer candidate values of the lower SCS are in a multiple relationship, thus obtaining the premise for determining the timer value for monitoring the downlink channel. After successfully selecting a reasonable timer value for monitoring the downlink channel, effective energy saving may be achieved.

An embodiment of the present disclosure provides a method for determining a timer candidate value, which is performed by a UE or a network device. FIG. 6 is a flowchart illustrating a method for determining a timer candidate value according to an exemplary embodiment. As shown in FIG. 6, the method includes the following step S601.

At S601, timer candidate values for SSSG switch corresponding to a first SCS are determined based on the first SCS, in which the timer candidate values include N times of all or part of the timer candidate value corresponding to the second SCS, and the second SCS is smaller than the first SCS; the first SCS is greater than or equal to 240KHz.

In some possible implementations, the second SCS is 120KHz.

In some possible implementations, the second SCS is 60KHz.

In some possible implementations, the downlink channel is a PDCCH.

In some possible implementations, the first SCS is 240KHz.

In some possible implementations, the first SCS is 480KHz.

In some possible implementations, the first SCS is 960KHz.

In some possible implementations, the first SCS is greater than 960 KHz.

In an example, N is 2. In another example, N is four. In yet another example, N is 8. In yet another example, N is 16.

In some possible implementations, the timer candidate values include N times of all timer candidate values corresponding to a second SCS, and the second SCS is smaller than the first SCS.

In a possible example, a number of timer candidate values for SSSG switch corresponding to the first SCS is the same as a number of timer candidate values for SSSG switch corresponding to the second SCS, and the timer candidate values for SSSG switch corresponding to the first SCS include N times of each timer candidate value for SSSG switch corresponding to the second SCS.

In some possible implementations, the timer candidate value includes N times of a part of timer candidate values corresponding to a second SCS, and the second SCS is smaller than the first SCS.

In a possible example, a number of timer candidate values for SSSG switch corresponding to the first SCS is smaller than a number of timer candidate values for SSSG switch corresponding to the second SCS, and the timer candidate values for SSSG switch corresponding to the first SCS are part of the timer candidate values for SSSG switch corresponding to the second SCS. The timer candidate values for SSSG switch corresponding to the first SCS include N times of a part of the timer candidate values for SSSG switch corresponding to the second SCS.

In a possible example, the timer candidate values for SSSG switch corresponding to the first SCS include 4 times of the timer candidate values for SSSG switch corresponding to the second SCS. The second SCS is 120KHz and the first SCS is 480KHz. The timer candidate values for SSSG switch corresponding to the second SCS include: {1, 2, 3, ..., 160, 240, 320, 400, 480, 640, 800}, where the `...' represents all values between 4 and 159. The timer candidate values for SSSG switch corresponding to the first SCS may be selected from {4, 8, 12,..., 640, 960, 1280, 1600, 1920, 2560, 3200}. For example, the timer candidate values for SSSG switch corresponding to the first SCS may include {4, 160, 640, 960, 1280, 1600, 2560, 3200}.

In a possible example, the timer candidate values for SSSG switch corresponding to the first SCS include 8 times of the timer candidate values for SSSG switch corresponding to the second SCS. The second SCS is 120KHz and the first SCS is 960KHz. The timer candidate values for SSSG switch corresponding to the second SCS include: {1, 2, 3, ..., 160, 240, 320, 400, 480, 640, 800}, where the '...' represents all values between 4 and 159. The timer candidate values for SSSG switch corresponding to the first SCS may be selected from {8, 16, 24,..., 1280, 1920, 2560, 3200, 5120, 6400}. For example, the timer candidate values for SSSG switch corresponding to the first SCS may include {8, 320, 1280, 1920, 2560, 3200, 5120, 6400}.

Optionally, in some possible implementations, the maximum value among the timer candidate values is greater than a first value, the first value is a maximum timer duration corresponding to a second SCS for SSSG switch, and the second SCS is smaller than the first SCS.

For example, in a possible example, the second SCS is 120KHz, and the maximum timer duration for SSSG switch corresponding to 120KHz is 800 slots, so the first value is 800 slots. When the first SCS is 480KHz, the maximum value among the timer candidate values corresponding to the first SCS is greater than 800 slots. When the first SCS is 960KHz, the maximum value among the timer candidate values corresponding to the first SCS is greater than 800 slots.

Optionally, in some possible implementations, the maximum value among the timer candidate values is N times the maximum timer candidate value corresponding to the second SCS, and the second SCS is smaller than the first SCS.

In an example, N is 2. In another example, N is four. In yet another example, N is 8. In yet another example, N is 16.

For example, in a possible example, the second SCS is 120KHz, and the maximum timer duration for SSSG switch corresponding to 120KHz is 800 slots. When the first SCS is 480KHz, the maximum value among the timer candidate values corresponding to the first SCS may be 1600 slots, 3200 slots, 6400 slots, etc. When the first SCS is 960KHz, the maximum value among the timer candidate values corresponding to the first SCS can be 1600 slots, 3200 slots, 6400 slots, etc.

Optionally, in a possible example, N is a ratio of the first SCS to the second SCS.

For example, in a possible example, the second SCS is 120KHz, and N is 4 when the first SCS is 480KHz, N is 8when the first SCS is 960KHz,.

Optionally, in a possible implementation, when the first SCS is 480KHz or 960KHz, the corresponding timer candidate values for SSSG switch are the same or different.

In the embodiments of the disclosure, the network device and the UE may independently determine, based on the first SCS, the timer candidate values for SSSG switch corresponding to the first SCS, and maintain a multiple relationship between the timer candidate values of the higher SCS and the timer candidate values of the lower SCS, thus obtaining the premise for determining the timer value for monitoring the downlink channel. After successfully selecting a reasonable timer value for monitoring the downlink channel, effective energy saving may be achieved.

An embodiment of the present disclosure provides a method for determining a timer candidate value, which is performed by a UE or a network device. FIG. 7 is a flowchart illustrating a method for determining a timer candidate value according to an exemplary embodiment. As shown in FIG. 7 , the method includes the following step S701.

At S701, timer candidate values for SSSG switch corresponding to a first SCS are determined based on the first SCS, in which a maximum value among the timer candidate values is N times a maximum timer candidate value corresponding to the second SCS, or the timer candidate values include N times of all or part of the timer candidate values corresponding to the second SCS, where N is a ratio of the first SCS to the second SCS, and the second SCS is smaller than the first SCS; the first SCS is greater than or equal to 240KHz.

For example: In a possible example, the second SCS is 120KHz, when the first SCS is 480KHz, N is 4; when the first SCS is 960KHz, N is 8.

In some possible implementations, the second SCS is 120KHz.

In some possible implementations, the second SCS is 60KHz.

In some possible implementations, the downlink channel is a PDCCH.

In some possible implementations, the first SCS is 240KHz.

In some possible implementations, the first SCS is 480KHz.

In some possible implementations, the first SCS is 960KHz.

In some possible implementations, the first SCS is greater than 960 KHz.

In some possible implementations, a maximum value among the timer candidate values is greater than a first value, the first value is a maximum timer duration corresponding to a second SCS for SSSG switch, and the second SCS is smaller than the first SCS.

In a possible example, the second SCS is 120 KHz, and a maximum timer duration for SSSG switch corresponding to 120 KHz is 800 slots, so the first value is 800 slots.

In a possible implementation, when the first SCS is 480 KHz or 960 KHz, the corresponding timer candidate values for SSSG switch are the same or different.

In the embodiments of the disclosure, the network device and the UE may independently determine, based on the first SCS, the timer candidate values for SSSG switch corresponding to the first SCS, thus obtaining the premise for determining the timer value for monitoring the downlink channel. After successfully selecting a reasonable timer value for monitoring the downlink channel, energy saving may be effectively achieved.

An embodiment of the present disclosure provides a method for determining a timer value. FIG. 8 is a flowchart illustrating a method for determining a timer value according to an exemplary embodiment. As shown in FIG. 8, the method includes the following steps S801-S804.

At S801, the network device 101 determines a timer candidate value for SSSG switch corresponding to a first SCS based on the first SCS, in which the first SCS is greater than or equal to 240KHz.

At S802, the network device 101 selects a timer candidate value from the timer candidate values.

At S803, the network device 101 sends timer value indication information to the UE, in which the timer value indication information indicates a timer value for monitoring the downlink channel; the timer value indication information corresponds to the timer candidate value selected; and the first SCS is greater than or equal to 240KHz.

At S804, the UE 102 receives the timer value indication information from the network device, in which the timer value indication information indicates a timer value for monitoring the downlink channel; the timer value is one of timer candidate values for SSSG switch corresponding to the first SCS, the timer candidate values are determined by the network device based on the first SCS; and the first SCS is greater than or equal to 240KHz.

In some possible implementations, the downlink channel is a PDCCH.

In some possible implementations, the first SCS is 240KHz.

In some possible implementations, the first SCS is 480KHz.

In some possible implementations, the first SCS is 960KHz.

In some possible implementations, the first SCS is greater than 960 KHz.

In some possible implementations, a maximum value among the timer candidate values is greater than a first value, the first value is a maximum timer duration corresponding to a second SCS for SSSG switch.

In a possible example, the second SCS is 120 KHz, and the maximum timer duration for SSSG switch corresponding to 120 KHz is 800 slots, so the first value is 800 slots.

In some possible implementations, a maximum value among the timer candidate values is N times a maximum timer candidate value corresponding to the second SCS.

In an example, N is 2. In another example, N is 4. In yet another example, N is 8. In yet another example, N is 16.

In a possible example, N is a ratio of the first SCS to the second SCS.

In a possible implementation, when the first SCS is 480 KHz or 960 KHz, the corresponding timer candidate values for SSSG switch are the same or different.

In a possible implementation, the network device determines timer candidate values for SSSG switch corresponding to the first SCS, selects a timer candidate value from the timer candidate values, and informs the UE that the selected timer candidate value is the timer value for monitoring the downlink channel, thus facilitating smooth monitoring of the UE.

The selection of timer candidate values for the first SCS has been described in detail in the previous embodiments, which will not be repeated here.

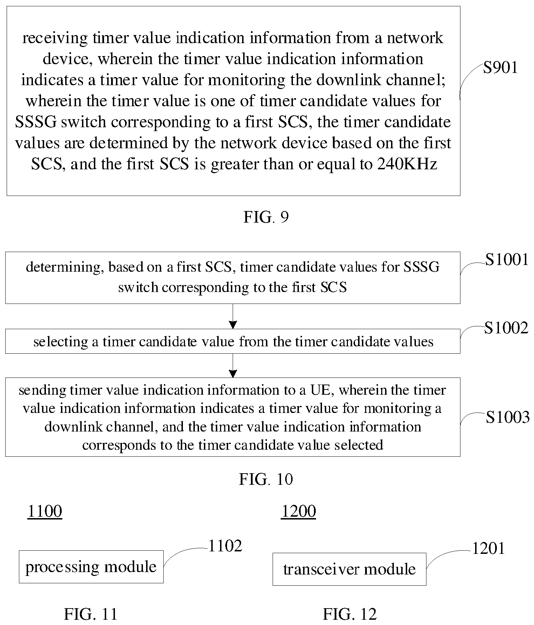

An embodiment of the present disclosure provides a method for determining a timer value, which is executed by a UE. FIG. 9 is a flowchart illustrating a method for determining a timer value according to an exemplary embodiment. As shown in FIG. 9 , the method includes the following step S901.

At S901, timer value indication information is received from a network device, in which the timer value indication information indicates a timer value for monitoring a downlink channel;

The timer value is one of the timer candidate values for SSSG switch corresponding to the first SCS, determined by the network device based on the first SCS. The first SCS is greater than or equal to 240KHz.

In some possible implementations, the downlink channel is a PDCCH.

In some possible implementations, the first SCS is 240KHz.

In some possible implementations, the first SCS is 480KHz.

In some possible implementations, the first SCS is 960KHz.

In some possible implementations, the first SCS is greater than 960 KHz.

In some possible implementations, a maximum value among the timer candidate values is greater than a first value, the first value is a maximum timer duration corresponding to a second SCS for SSSG switch, and the second SCS is smaller than the first SCS.

In a possible example, the second SCS is 120 KHz, and the maximum timer duration for SSSG switch corresponding to 120 KHz is 800 slots, so the first value is 800 slots.

In some possible implementations, a maximum value among the timer candidate values is N times a maximum timer candidate value corresponding to a second SCS, and the second SCS is smaller than the first SCS.

In some possible implementations, the timer candidate values include N times of all or part of the timer candidate values corresponding to a second SCS, and the second SCS is smaller than the first SCS.

In an example, N is 2. In another example, N is 4. In yet another example, N is 8. In yet another example, N is 16.

In a possible example, N is a ratio of the first SCS to the second SCS.

In a possible implementation, when the first SCS is 480 KHz or 960 KHz, the corresponding timer candidate values for SSSG switch are the same or different.

The selection of timer candidate values for the first SCS has been described in detail in the previous embodiments, which will not be repeated here.

An embodiment of the present disclosure provides a method for determining a timer value, which is performed by a network device. FIG. 10 is a flowchart illustrating a method for determining a timer value according to an exemplary embodiment. As shown in FIG. 10, the method includes the following steps S1001-S1004.

At S1001, timer candidate values for SSSG switch corresponding to a first SCS are determined based on the first SCS.

At S1002, a timer candidate value is selected from the timer candidate values.

At S1003, timer value indication information is sent to a UE, in which the timer value indication information indicates a timer value for monitoring a downlink channel, and the timer value indication information corresponds to the timer candidate value selected.

The first SCS is greater than or equal to 240KHz. In some possible implementations, the downlink channel is a PDCCH.

In some possible implementations, the first SCS is 240KHz.

In some possible implementations, the first SCS is 480KHz.

In some possible implementations, the first SCS is 960KHz.

In some possible implementations, the first SCS is greater than 960 KHz.

In some possible implementations, a maximum value among the timer candidate values is greater than a first value, the first value is a maximum timer duration corresponding to a second SCS for SSSG switch, and the second SCS is smaller than the first SCS.

In a possible example, the second SCS is 120 KHz, and the maximum timer duration for SSSG switch corresponding to 120 KHz is 800 slots, so the first value is 800 slots.

In some possible implementations, a maximum value among the timer candidate values is N times a maximum timer candidate value corresponding to a second SCS, and the second SCS is smaller than the first SCS.

In some possible implementations, the timer candidate values include N times of all or part of the timer candidate value corresponding to a second SCS, and the second SCS is smaller than the first SCS.

In a possible example, N is a ratio of the first SCS to the second SCS.

In a possible implementation, when the first SCS is 480 KHz or 960 KHz, the corresponding timer candidate values for SSSG switch are the same or different.

The selection of timer candidate values for the first SCS has been described in detail in the previous embodiments, which will not be repeated here.

Based on the same concept as the above method embodiments, the embodiments of the present disclosure also provide a communication apparatus, which may have the functions of the UE 102 in the above method embodiments and may be used to perform the steps performed by the UE 102 in the above method embodiments. The functions may be implemented in hardware, or software, or hardware executing corresponding software. The hardware or software includes one or more modules corresponding to the above functions.

In a possible implementation, the communication apparatus 1100 shown in FIG. 11 may be used as the UE involved in the above method embodiments, and execute the steps performed by the UE in the above method embodiments. As shown in FIG. 11, the communication apparatus 1100 may include a processing module 1102, and the processing module 1102 may be used to support the communication apparatus 1100 in performing processing actions in the above method embodiments.

When the steps performed by the UE 102 are executed, the processing module is configured to determine based on a first SCS, timer candidate values for SSSG switch corresponding to the first SCS. The first SCS is greater than or equal to 240KHz.

In a possible implementation, a communication apparatus 1200 shown in FIG. 12 may be used as the UE involved in the above method embodiments, and execute the steps performed by the UE in the above method embodiments. As shown in FIG. 12, the communication apparatus 1200 may include a transceiver module 1201 and a processing module 1202. The transceiver module 1201 and the processing module 1202 are coupled to each other. The transceiver module 1201 may be used to support the communication apparatus 1200 to communicate. The transceiver module 1201 may have a wireless communication function, for example, it may be able to communicate wirelessly with other communication devices through a radio interface. The processing module 1202 may be used to support the communication apparatus 1200 to perform processing actions in the above method embodiments, including but not limited to, generating information and messages sent by the transceiver module 1201, and/or demodulating and decoding the signal received by the transceiver module 1201, etc.

When the steps performed by the UE 102 are executed, the transceiver module 1201 is configured to receive timer value indication information from a network device. The timer value indication information indicates a timer value for monitoring a downlink channel.

The timer value is one of the timer candidate values for SSSG switch corresponding to the first SCS, determined by the network device based on the first SCS. The first SCS is greater than or equal to 240KHz.

In some possible implementations, a maximum value among the timer candidate values is greater than a first value, the first value is a maximum timer duration corresponding to a second SCS for SSSG switch, and the second SCS is smaller than the first SCS.

In some possible implementations, a maximum value among the timer candidate values is N times a maximum timer candidate value corresponding to a second SCS, and the second SCS is smaller than the first SCS.

In some possible implementations, the timer candidate values include N times of all or part of the timer candidate values corresponding to the second SCS, and the second SCS is smaller than the first SCS.

In some possible implementations, N is a ratio of the first SCS to the second SCS.

In some possible implementations, the second SCS is 120KHz.

In some possible implementations, when the first SCS is 480KHz or 960KHz, the corresponding timer candidate values for SSSG switch are the same or different.

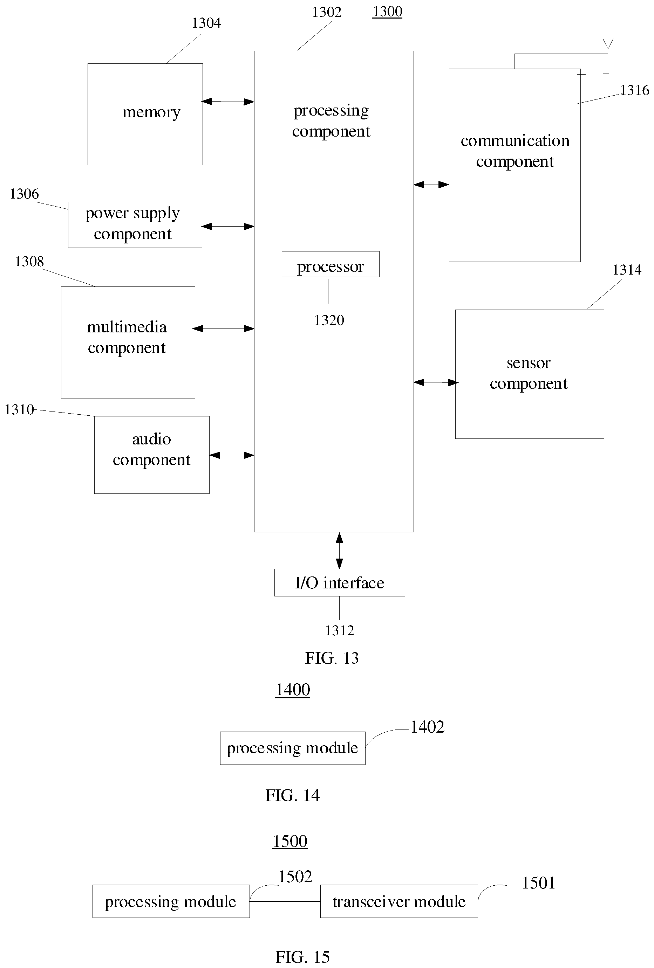

When the communication apparatus is the UE 102, its structure may also be as shown in FIG. 13. Referring to FIG. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 generally controls overall operation of the device 1300, such as operations associated with display, telephone calls, data communications, camera operations, and recording operations. The processing component 1302 may include one or more processors 1320 to execute instructions to complete all or part of the steps of the above methods. In addition, the processing component 1302 may include one or more modules to facilitate interactions between the processing component 1302 and other components. For example, the processing component 1302 may include a multimedia module to facilitate interactions between the multimedia component 1308 and the processing component 1302.

The memory 1304 is configured to store various types of data to support operations at the device 1300. Examples of such data include instructions for any application or method operating on the device 1300, contact data, phonebook data, messages, pictures, videos, etc. The memory 1304 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic storage, a flash memory, a magnetic disk or an optical disk.

The power component 1306 provides powers to various components of the device 1300. The power component 1306 may include a power management system, one or more power supplies, and other components associated with generating, managing, and distributing powers for the device 1300.

The multimedia component 1308 includes a screen that provides an output interface between the device 1300 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touches, slides, and gestures on the touch panel. The touch sensor may not only sense a boundary of a touch or sliding action, but also detect a duration and pressure associated with the touch or sliding operation. In some embodiments, the multimedia component 1308 includes a front-facing camera and/or a rear-facing camera. When the device 1300 is in an operation mode, such as a shooting mode or a video mode, the front camera and/or the rear camera may receive external multimedia data. Each of the front-facing camera and the rear-facing camera may be a fixed optical lens system or may have variable focal length and optical zoom capabilities.

The audio component 1310 is configured to output and/or input audio signals. For example, the audio component 1310 includes a microphone (MIC), which is configured to receive external audio signals when the device 1300 is in an operating mode, such as a call mode, a recording mode, and a voice recognition mode. The received audio signal may be further stored in the memory 1304 or transmitted via the communication component 1316. In some embodiments, the audio component 1310 also includes a speaker for outputting audio signals.

The I/O interface 1312 provides an interface between the processing component 1202 and a peripheral interface module, which may be a keyboard, a click wheel, a button, etc. The button may include, but is not limited to: a home button, volume buttons, a start button, and a lock button.

The sensor component 1314 includes one or more sensors for providing status assessment of various aspects for the device 1300. For example, the sensor component 1314 may detect an open/closed state of the device 1300, a relative positioning of components, such as a display and a keypad of device 1300. The sensor component 1314 may also detect position changes of the device 1300 or a component of the device 1300, a presence or absence of user contacts with the device 1300, an orientation or an acceleration/deceleration of the device 1300 and temperature changes of the device 1300. The sensor component 1314 may include a proximity sensor configured to detect a presence of a nearby object without any physical contact. The sensor component 1314 may also include a light sensor, such as a CMOS or CCD image sensor, for use in imaging applications. In some embodiments, the sensor component 1314 may also include an acceleration sensor, a gyroscope sensor, a magnetic sensor, a pressure sensor, or a temperature sensor.

The communication component 1316 is configured to facilitate wired or wireless communication between the device 1300 and other devices. The device 1300 may access a wireless network based on a communication standard, such as WiFi, 4G or 5G, or their combination. In an exemplary embodiment, the communication component 1316 receives a broadcast signal or broadcast-related information from an external broadcast management system via a broadcast channel. In an exemplary embodiment, the communication component 1316 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an exemplary embodiment, the device 1300 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above-mentioned methods.

In an exemplary embodiment, a non-transitory computer-readable storage medium including instructions is also provided, such as the memory 1304 including instructions. The above instructions may be executed by the processor 1320 of the device 1300 to perform the above methods. For example, the non-transitory computer-readable storage medium may be a ROM, a random access memory (RAM), a CD-ROM, a magnetic tape, a floppy disk, an optical data storage device, and the like.

Based on the same concept as the above method embodiments, the embodiments of the present disclosure also provide a communication apparatus, which may have the functions of the network device 101 in the above method embodiments and may be used to execute the steps performed by the network device 101 in the above method embodiments. The functions may be implemented in hardware, or software or hardware executing corresponding software. The hardware or software includes one or more modules corresponding to the above functions.

In a possible implementation, the communication apparatus 1400 shown in FIG. 14 may be used as the network device involved in the above method embodiments, and execute the steps performed by the network device in the above method embodiments. As shown in FIG. 14, the communication apparatus 1400 may include a processing module 1402. The processing module 1402 may be used to support the communication apparatus 1400 in performing processing actions in the above method embodiments.

When the steps performed by the network device 101 are executed, the processing module is configured to determine based on a first SCS, timer candidate values for SSSG switch corresponding to the first SCS. The first SCS is greater than or equal to 240KHz.

In a possible implementation, a communication apparatus 1500 shown in FIG. 15 may be used as the network device involved in the above method embodiments, and execute the steps performed by the network device in the above method embodiments. As shown in FIG. 15, the communication apparatus 1500 may include a transceiver module 1501 and a processing module 1502. The transceiver module 1501 and the processing module 1502 are coupled to each other. The transceiver module 1501 may be used to support the communication apparatus 1500 to communicate. The transceiver module 1501 may have a wireless communication function, for example, it may be able to communicate wirelessly with other communication devices through a radio interface. The processing module 1502 may be used to support the communication apparatus 1500 to perform processing actions in the above method embodiments, including but not limited to, generating information and messages sent by the transceiver module 1501, and/or demodulating and decoding the signal received by the transceiver module 1501, etc.

The processing module is configured to determine, based on a first SCS, timer candidate values for SSSG switch corresponding to the first SCS; and further configured to select a timer candidate value from the timer candidate values.

The transceiver module is configured to send timer value indication information to a UE. The timer value indication information indicates a timer value for monitoring a downlink channel. The timer value indication information corresponds to the timer candidate value selected. The first SCS is greater than or equal to 240KHz.

In some possible implementations, a maximum value among the timer candidate values is greater than a first value, the first value is a maximum timer duration corresponding to a second SCS for SSSG switch, and the second SCS is smaller than the first SCS.

In some possible implementations, a maximum value among the timer candidate values is N times a maximum timer candidate value corresponding to a second SCS, and the second SCS is smaller than the first SCS.

In some possible implementations, the timer candidate values include N times of all or part of timer candidate values corresponding to a second SCS, and the second SCS is smaller than the first SCS.

In some possible implementations, N is a ratio of the first SCS to the second SCS.

In some possible implementations, the second SCS is 120KHz.

In some possible implementations, when the first SCS is 480KHz or 960KHz, the corresponding timer candidate values for SSSG switch are the same or different.

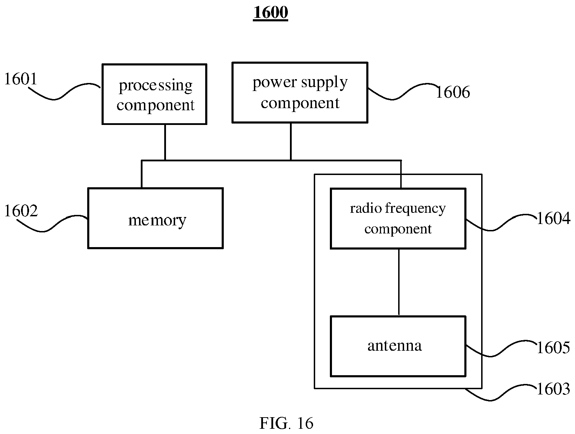

When the communication apparatus is the network device 102, its structure may also be as shown in FIG. 16. The structure of the communication device is described by taking a base station as an example. As shown in FIG. 16, the device 1600 includes a memory 1601, a processor 1602, a transceiver component 1603, and a power supply component 1606. The memory 1601 is coupled to the processor 1602 and may be used to store programs and data necessary for the communication device 1600 to implement various functions. The processor 1602 is configured to support the communication device 1600 to execute corresponding functions in the above methods, and the functions may be implemented by calling the programs stored in the memory 1601. The transceiver component 1603 may be a wireless transceiver, which may be used to support the communication device 1600 to receive signaling and/or data, and send signaling and/or data through a radio interface. The transceiver component 1603 may also be referred to as a transceiver unit or a communication unit. The transceiver component 1603 may include a radio frequency component 1604 and one or more antennas 1605. The radio frequency component 1604 may be a remote radio unit (RRU), which may be specifically used for transmission of radio frequency signals and conversion of radio frequency signals into baseband signals. The one or more antennas 1605 may be specifically used for radiation and reception of radio frequency signals.

When the communication device 1600 needs to send data, the processor 1602 may perform baseband processing on data to be sent and output a baseband signal to the RF unit. The RF unit performs RF processing on the baseband signal and then sends a RF signal in the form of electromagnetic waves through the antenna. When data is sent to the communication device 1600, the RF unit receives a RF signal through the antenna, converts the RF signal into a baseband signal, and outputs the baseband signal to the processor 1602. The processor 1602 converts the baseband signal into data and processes the data.

Other implementations of the embodiments of the disclosure may be apparent to those skilled in the art from consideration of the specification and practice of the invention disclosed herein. This invention is intended to cover any modifications, uses or adaptive changes of the embodiments of the present disclosure, which follow the general principles of the embodiments of the present disclosure and include common knowledge or conventional technical means in the technical field that are not disclosed in the present disclosure. It is intended that the specification and examples be considered as exemplary only, with a true scope and spirit of the embodiments of the disclosure being indicated by the following claims.

It should be understood that the embodiments of the present disclosure are not limited to the exact structures that have been described above and shown in the drawings, and that various modifications and changes may be made without departing from the scope of the disclosure. The scope of the embodiments of the disclosure is limited only by the appended claims.

### Industrial Applicability

The network device and the UE may independently determine based on the first SCS, the timer candidate values for SSSG switch corresponding to the first SCS, thus obtaining the premise for determining the timer value for monitoring the downlink channel. After successfully selecting a reasonable timer value for monitoring the downlink channel, energy may be effectively saved.

## Claims

1. A method for determining a timer candidate value, performed by a user equipment or a network device, comprising:
determining, based on a first subcarrier spacing (SCS), timer candidate values for search space set group (SSSG) switch corresponding to the first SCS, wherein the first SCS is greater than or equal to 240KHz.

2. The method according to claim 1, wherein a maximum value among the timer candidate values is greater than a first value, the first value is a maximum timer duration for SSSG switch corresponding to a second SCS, and the second SCS is smaller than the first SCS.

3. The method according to claim 1, wherein a maximum value among the timer candidate values is N times a maximum timer candidate value corresponding to a second SCS, and the second SCS is smaller than the first SCS.

4. The method according to claim 1, wherein the timer candidate values comprise N times of all or part of timer candidate values corresponding to a second SCS, and the second SCS is smaller than the first SCS.

5. The method according to claim 3 or 4, wherein N is a ratio of the first SCS to the second SCS.

6. The method according to any one of claims 2 to 4, wherein the second SCS is 120KHz.

7. The method according to claim 1, wherein when the first SCS is 480KHz or 960KHz, corresponding timer candidate values for SSSG switch are the same or different.

8. A method for determining a timer value for monitoring a downlink channel, performed by a user equipment, comprising:
receiving timer value indication information from a network device, wherein the timer value indication information indicates a timer value for monitoring the downlink channel;
wherein the timer value is one of timer candidate values for search space set group (SSSG) switch corresponding to a first subcarrier spacing (SCS), the timer candidate values are determined by the network device based on the first SCS, and the first SCS is greater than or equal to 240KHz.

9. The method according to claim 8, wherein a maximum value among the timer candidate values is greater than a first value, the first value is a maximum timer duration corresponding to a second SCS for SSSG switch, and the second SCS is smaller than the first SCS.

10. The method according to claim 8, wherein a maximum value among the timer candidate values is N times a maximum timer candidate value corresponding to a second SCS.

11. The method according to claim 8, wherein the timer candidate values comprise N times of all or part of timer candidate values corresponding to a second SCS.

12. The method according to claim 10 or 11, wherein N is a ratio of the first SCS to the second SCS.

13. The method according to any one of claims 9 to 11, wherein the second SCS is 120KHz.

14. The method according to any one of claims 9 to 11, wherein when the first SCS is 480KHz or 960KHz, corresponding timer candidate values for SSSG switch are the same or different.

15. The method according to any one of claims 9 to 11, wherein the first SCS is 480KHz.

16. The method according to any one of claims 9 to 11, wherein the first SCS is 960KHz.

17. The method according to any one of claims 9 to 11, wherein the downlink channel is a physical downlink control channel (PDCCH).

18. A method for determining a timer value for monitoring a downlink channel, performed by a network device, comprising:
determining, based on a first subcarrier spacing (SCS), timer candidate values for search space set group (SSSG) switch corresponding to the first SCS;
selecting a timer candidate value from the timer candidate values; and
sending timer value indication information to a user equipment, wherein the timer value indication information indicates a timer value for monitoring the downlink channel, the timer value indication information corresponds to the timer candidate value selected;
wherein the first SCS is greater than or equal to 240KHz.

19. The method according to claim 18, wherein a maximum value among the timer candidate values is greater than a first value, the first value is a maximum timer duration corresponding to a second SCS for SSSG switch, and the second SCS is smaller than the first SCS.

20. The method according to claim 18, wherein a maximum value among the timer candidate values is N times a maximum timer candidate value corresponding to a second SCS.

21. The method according to claim 18, wherein the timer candidate values comprise N times of all or part of timer candidate values corresponding to the second SCS.

22. The method according to claim 20 or 21, wherein N is a ratio of the first SCS to the second SCS.

23. The method according to any one of claims 19 or 21, wherein the second SCS is 120KHz.

24. The method according to any one of claims 19 to 21, wherein when the first SCS is 480KHz or 960KHz, corresponding timer candidate values for SSSG switch are the same or different.

25. The method according to any one of claims 19 to 21, wherein the first SCS is 480KHz.

26. The method according to any one of claims 19 to 21, wherein the first SCS is 960KHz.

27. The method according to any one of claims 19 to 21, wherein the downlink channel is a physical downlink control channel (PDCCH).

28. A communication apparatus, arranged in a user equipment, comprising:
a processing module, configured to determine, based on a first subcarrier spacing (SCS), timer candidate values for search space set group (SSSG) switch corresponding to the first SCS, wherein the first SCS is greater than or equal to 240KHz.

29. A communication apparatus, arranged in a network device, comprising:
a processing module, configured to determine, based on a first subcarrier spacing (SCS), timer candidate values for search space set group (SSSG) switch corresponding to the first SCS, wherein the first SCS is greater than or equal to 240KHz.

30. A communication apparatus, arranged in a user equipment, comprising:
a transceiver module, configured to receive timer value indication information from a network device, wherein the timer value indication information indicates a timer value for monitoring the downlink channel;
wherein the timer value is one of timer candidate values for search space set group (SSSG) switch corresponding to a first subcarrier spacing (SCS), the timer candidate values are determined by the network device based on the first SCS, and the first SCS is greater than or equal to 240KHz.

31. A communication apparatus, arranged in a network device, comprising:
a processing module, configured to determine, based on a first subcarrier spacing (SCS), timer candidate values for search space set group (SSSG) switch corresponding to the first SCS; and select a timer candidate value from the timer candidate values;
a transceiver module, configured to send timer value indication information to a user equipment, wherein the timer value indication information indicates a timer value for monitoring a downlink channel, the timer value indication information corresponds to the timer candidate value selected;
wherein the first SCS is greater than or equal to 240KHz.

32. A communication device, comprising: a processor, and a memory storing computer programs, wherein when the computer programs are executed by the processor, the method according to any one of claims 1 to 7 or the method according to any one of claims 8 to 17 is implemented.

33. A communication device, comprising: a processor, and a memory storing computer programs, wherein when the computer programs are executed by the processor, the method according to any one of claims 1 to 7 or the method according to any one of claims 18 to 27 is implemented.

34. A computer-readable storage medium having instructions stored thereon, which, when called and executed by a computer, enable the computer to execute the method according to any one of claims 1 to 7 or the method according to any one of claims 8 to 17.

35. A computer-readable storage medium having instructions stored therein, which, when called and executed by a computer, enable the computer to execute the method according to any one of claims 1 to 7 or the method according to any one of claims 18 to 27.
